# EUROPEAN PATENT APPLICATION

(11) **EP 4 621 600 A1**
(43) Date of publication of application: **24.09.2025**
(21) Application number: 23892129.0
(22) Date of filing: 14.11.2023
(51) Int. Cl.: G06F 16/9032, G06F 3/048

(54) **SEARCH INTERFACE DISPLAY METHOD AND APPARATUS, ELECTRONIC DEVICE, AND STORAGE MEDIUM**

(30) Priority: 14.11.2022 CN 202211426305
(71) Applicant: Lemon Inc., Grand Cayman, KY1-1205 (KY)
(72) Inventor: HE, Shengfan, Beijing 100028 (CN)
(74) Representative: Marks & Clerk LLP
(86) International application number: PCT/SG2023/050753
(87) International publication number: WO 2024/107106

(57) **Abstract**

The present disclosure relates to a search interface display method and apparatus, an electronic device, and a storage medium. The method comprises: displaying a search interface on a first page, the search interface providing a first search mode and a second search mode, and the search interface comprising a search input region used to input a search keyword; in the first search mode, the search interface also comprises a search prompt region, the search prompt region being used to display a means of triggering the second search mode; in the second search mode, the search input region also comprises a search category input region, the search category input region being used to input a search category; the search input region comprises a plurality of keyword input rows, and each keyword input row is used to input a search keyword. By means of a solution provided in the present disclosure, single search and batch search can be simultaneously supported in a unified search interface, the user interface friendliness is optimized, operation is easy, and search efficiency can be increased.

## Description

### CROSS-REFERENCE TO RELATED APPLICATIONS

The present application is based on and claims priority to Chinese Patent Application No. 202211426305.X, filed on November 14, 2022, which is incorporated herein by reference in its entirety.

### TECHNICAL FIELD

The present disclosure relates to the field of computer technology, and in particular, to a search interface display method and apparatus, an electronic device, and a storage medium.

### BACKGROUND

It is very common to use a search interface to search on the Web. A user can enter a search keyword in a search input box, to obtain a word search result about the keyword. In a platform-based SaaS product, the user also has requirements to search platform content to obtain a search result. The requirements of the user for platform-based SaaS product search are more similar to those for database search, but the search habits of the user may be more oriented to a search interface and search habits in the Web scenario, which result in the user being dissatisfied with an interaction mode and experience of an existing platform-based SaaS product search mode.

### SUMMARY

To meet search requirements of users for platform-based SaaS product, optimize a search interaction mode with users, and enhance search experience of users, the present disclosure provides the following solutions.

According to an aspect of the present disclosure, a search interface display method is provided, including:
displaying a search interface on a first page, wherein the above search interface provides a first search mode and a second search mode, and includes a search input area for inputting a search keyword,
wherein, in the first search mode, the search interface further includes a search prompt area, which is used to display a manner of triggering the above second search mode; and
in the second search mode, the above search input area further includes a search category input area, which is used to input a search category, and the above search input area includes a plurality of keyword input lines, each keyword input line being used to input one search keyword.

According to another aspect of the present disclosure, a search interface display apparatus is provided, including:
a display module, configured to display a search interface on a first page, wherein the above search interface provides a first search mode and a second search mode, and includes a search input area to input a search keyword,
wherein the above display module includes:
   a first search module, configured to display the above search interface in the first search mode, wherein in the first search mode, the search interface further includes a search prompt area, which is used to display a means of triggering the above second search mode; and
   a second search module, configured to display the above search interface in the second search mode, wherein the above search input area further includes a search category input area, which is used to input a search category, and the above search input area includes a plurality of keyword input lines, each keyword input line being used to input one search keyword.

According to still another aspect of the present disclosure, an electronic device is provided, including:
at least one processor; and
a memory configured to store instructions executable by the above at least one processor,
where the above at least one processor is configured to execute the above instructions, to implement the aforementioned search interface display method.

According to yet another aspect of the present disclosure, a computer-readable storage medium having a computer program stored thereon is provided, where when the above computer program is executed by a processor, the aforementioned search interface display method is implemented.

By the technical solutions provided in the present disclosure, a unified search interface can be utilized to support two different search modes, so as to implement switching between the two search modes, meet different search requirements of a user, optimize a search interaction mode, conform to search habits of the user, and improve search efficiency.

### BRIEF DESCRIPTION OF THE DRAWINGS

More details, features, and advantages of the present disclosure are disclosed in the following description of exemplary embodiments with reference to the accompanying drawings, in which:
FIG. 1 is a schematic diagram of a system architecture for implementing a search interface display method according to an exemplary embodiment of the present disclosure;
FIG. 2 is a flowchart of a search interface display method according to an exemplary embodiment of the present disclosure;
FIG. 3 is a schematic diagram of a platform application page according to an exemplary embodiment of the present disclosure;
FIG. 4 is a schematic diagram of a search page in a first search mode according to an exemplary embodiment of the present disclosure;
FIG. 5A is a schematic diagram of a search page in a second search mode, with a search category option widget hidden, according to an exemplary embodiment of the present disclosure;
FIG. 5B is a schematic diagram of a search page in a second search mode, with a search category option widget displayed, according to an exemplary embodiment of the present disclosure;
FIG. 6A is a schematic diagram of a search page triggered to enter a second search mode in a first manner according to an exemplary embodiment of the present disclosure;
FIG. 6B is a schematic diagram of a search page triggered to enter a second search mode in a second manner according to an exemplary embodiment of the present disclosure;
FIG. 7 is a flowchart of a search interface display method according to an exemplary embodiment of the present disclosure;
FIG. 8 is a schematic block diagram of functional modules of a search interface display apparatus according to an exemplary embodiment of the present disclosure;
FIG. 9 is a structural block diagram of an electronic device according to an exemplary embodiment of the present disclosure; and
FIG. 10 is a structural block diagram of a computer system according to an exemplary embodiment of the present disclosure.

### DETAILED DESCRIPTION

Embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only for exemplary purposes and are not intended to limit the protection scope of the present disclosure.

It should be understood that the various steps described in the method embodiments of the present disclosure may be performed in different orders, and/or performed in parallel. Furthermore, the method embodiments may include additional steps and/or omit performing the illustrated steps. The scope of the present disclosure is not limited in this respect.

The term "include " used herein and its variations are open-ended inclusions, that is, " include but not limited to". The term "based on" is "at least partially based on". The term "an embodiment" means "at least one embodiment"; the term "another embodiment" means "at least one additional embodiment"; and the term "some embodiments" means "at least some embodiments". Relevant definitions of other terms will be given in the description below. It should be noted that concepts such as "first" and "second" mentioned in the present disclosure are only used to distinguish different apparatuses, modules or units, and are not used to limit the order of or interdependence among functions performed by these apparatuses, modules or units.

It should be noted that the modifications of "one" and "a plurality of" mentioned in the present disclosure are illustrative rather than restrictive, and those skilled in the art should understand that unless the context clearly indicates otherwise, they should be understood as "one or more".

The names of messages or information exchanged between multiple apparatuses in the embodiments of the present disclosure are only for illustrative purposes, and are not intended to limit the scope of these messages or information.

Before the embodiments of the present disclosure are described, the relevant terms involved in the embodiments of the present disclosure will be first interpreted as follows.

SaaS, the abbreviated name for Software-as-a-Service, means software as a service, which provides a software service over a network.

Vertical search means searching for information in a specific vertical field, and the search ability may be reformed with reference to the characteristics of the vertical field, such as shopping, music, and literature.

The solutions of the present disclosure are described below with reference to the accompanying drawings, specifically as follows.

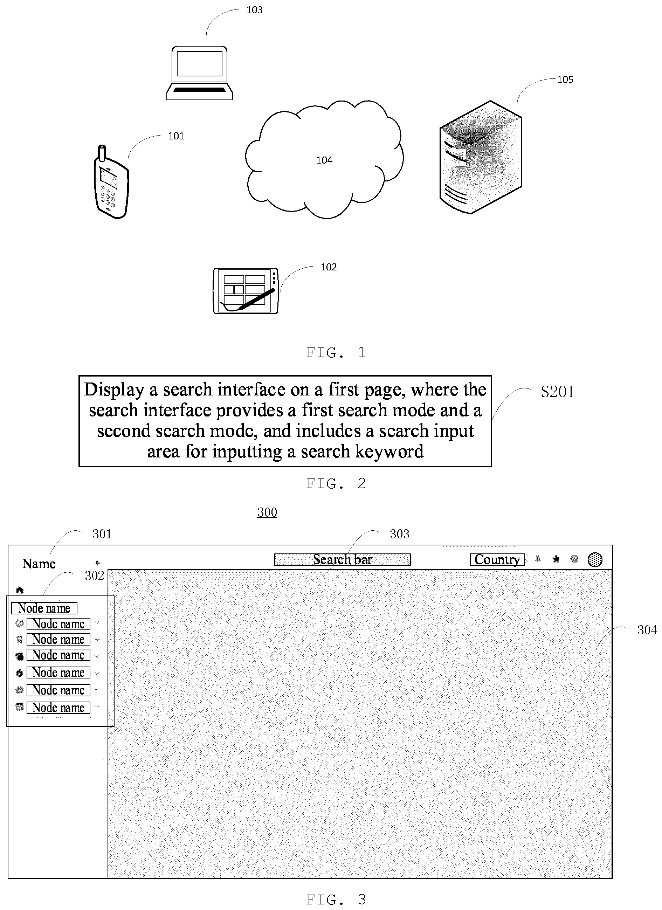

FIG. 1 is a schematic diagram of a system architecture for implementing a search interface display method according to an exemplary embodiment of the present disclosure.

As shown in FIG. 1, the system architecture may include a terminal (such as one or more of a smartphone 101, a tablet 102 and a portable computer 103 shown in FIG. 1, or may be a desktop computer, or the like), a network 104, and a server 105. The network 104 is a medium configured to provide a communication link between a terminal device and the server 105. The network 104 may include various connection types, such as a wired communication link and a wireless communication link.

It should be understood that the number of terminals, networks, and servers in FIG. 1 is only illustrative. There may be any number of terminals, networks, and servers based on actual requirements. For example, the server 105 may be a server cluster composed of a plurality of servers, or the like.

In an exemplary scenario, the terminal sends a search request to the server 105, and in response to the request, the server 105 sends, to the terminal, a page for providing a search service or generation information on the page. The terminal receives the information and displays, on a display device, the page for providing the search service.

FIG. 2 is a flowchart of a search interface display method according to an exemplary embodiment of the present disclosure.

As shown in FIG. 2, a search interface display method is provided, and includes the following steps. S201: displaying a search interface on a first page, wherein the search interface provides a first search mode and a second search mode, and includes a search input area for inputting a search keyword.
wherein, in the first search mode, the search interface further includes a search prompt area, which is used to display a manner of triggering the second search mode;

in the second search mode, the search input area further includes a search category input area, which is used to input a search category, and the search input area includes a plurality of keyword input lines, each keyword input line being used to input one search keyword.

By the above solution, two search modes are supported in the same search interface, and a triggering manner for switching to the second search mode is prompted in the first search mode, so that a user can very easily switch from the first search mode to the second search mode to implement multi-keyword (also referred to as batch search) vertical category search. This search interface and search switching mode conform to search habits of the user, can implement the vertical category search for multiple keywords, and provide general search and batch vertical category search with unified interface compatibility, thereby improving search efficiency and enhancing the experience of the search interface.

In step S201, the search interface provides the first search mode by default, and the search interface provides the second search mode in response to the second search mode being triggered, where the first search mode is single search, and the second search mode is batch search.

The manner of triggering the second search mode includes one of the following:
inputting a plurality of keywords connected by a preset symbol in the search input area in the first search mode; triggering a preset condition in the first search mode, wherein the preset condition includes a preset key or a preset button.

The search prompt area is used to display the preset condition.

The preset key may include a preset single key or a preset combination of a plurality of keys; and the preset button includes clickable text.

When the plurality of keywords connected by the preset symbol are inputted into the search input area in the first search mode, the search interface enters into the second search mode; and each of the plurality of keywords can be automatically inputted into one of the keyword input lines.

When the preset condition is triggered in the first search mode, the search interface enters the second search mode; and
in response to a keyword inputted into the search input area in the first search mode, the keyword is automatically inputted into a first keyword input line among the plurality of keyword input lines.

The search category input area includes a search category button, which is configured to display a current search category.

The search category input area further includes a hidden option widget, and the hidden option widget is configured to display a plurality of selectable search categories in response to the search category button being triggered.

Before the displaying a search interface on a first page, the method further includes triggering a search request on a second page,
where the second page is a page different from the first page.

The first page further includes a search result interface, and the search result interface includes a plurality of tab bars, in response to a tab bar being triggered, a search result corresponding to the currently triggered tab bar is displayed on the search result interface.

FIG. 3 is a schematic diagram of a platform application page according to an exemplary embodiment of the present disclosure.

As shown in FIG. 3, in some platforms that provide SaaS functions, a user often needs to search for a service provided by the platforms and content related to the service. The search is different from a general Internet search but more similar to database search, therefore, a search function needs to be provided in the platforms to meet the search requirements of the user. As shown in FIG. 3, the platform application page 300 includes a name 301, a menu bar 302, a search bar 303, and an application content area 304.

In some embodiments, a platform application may be a content providing platform (such as a video platform), an analysis platform (such as an e-commerce data analysis platform), a statistical platform (such as a traffic statistics platform), an approval platform, or the like.

The user triggers a search request through the search bar 303, for example, by clicking on the search bar 303.

In some embodiments, in response to a search request triggered on an application interaction page, step S201 is entered. As shown in FIG. 3, for example, a search request may be triggered by clicking on the search bar 303, in response to the search request, a search interface is displayed on the first page in step S201, wherein the first page is a search page.

The platform application page shown in FIG. 3 is mainly used to provide various service content of the platform application, and usually, provide service content corresponding to each of node names in the menu bar 302 according to the corresponding node name. If display of search results is continued on the current page, a display effect of an original platform application may be affected, and an original page configuration needs to be changed and adjusted. By triggering the search page, the search function can be carried out by a new page, which can support a richer search page configuration without affecting an original platform application page.

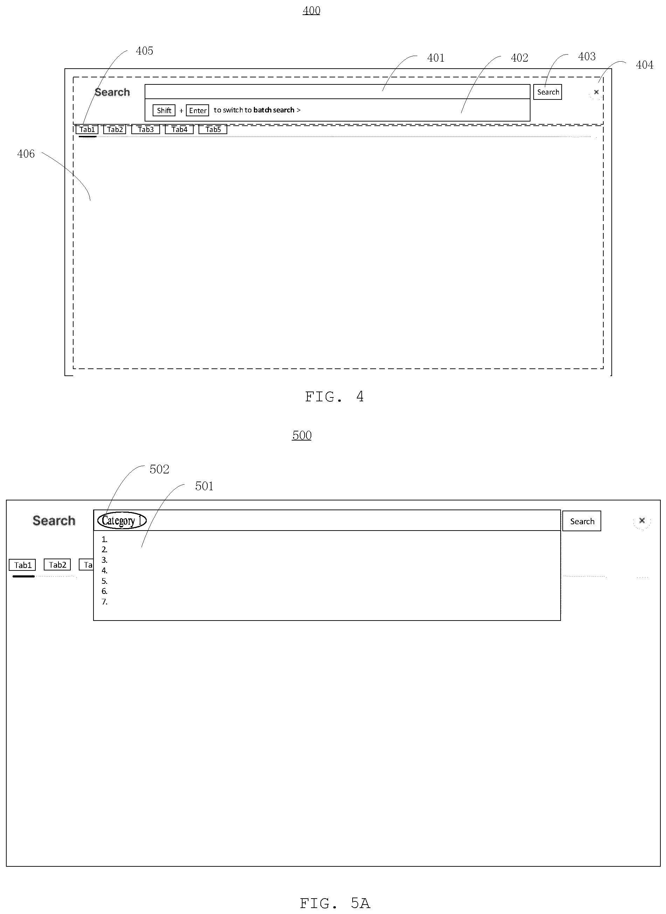

FIG. 4 is a schematic diagram of a search page in a first search mode according to an exemplary embodiment of the present disclosure.

As shown in FIG. 4, the search page 400 includes a search interface. In the first search mode, the search interface includes a search input area 401 for inputting a search keyword, a search prompt area 402 for displaying a manner of triggering a second search mode, a search trigger button 403 for triggering search, and a search exit button 404 for exiting a current search page.

The search page 400 further includes a search result interface, which includes a plurality of tab bars 405 and a search result display area 406. In response to a tab bar among the plurality of tab bars 405 being triggered, a search result corresponding to the currently triggered tab bar is displayed on the search result interface.

In some embodiments, the tab bars may include "All", a tab bar 1, a tab bar 2, a tab bar 3, a tab bar 4, and a tab bar 5. By default, the search results are displayed under the "All" tab bar, and the displayed results include a result for each of the tab bars 1 to 5. In some embodiments, due to the limitation of display page size, under the "All" tab bar, a preset number of search results may be displayed corresponding to each of the tab bars 1 to 5, and an expand button, such as "Expand" and "More Results", may be set to further display more results corresponding to a current tab bar. Alternatively, a jump may be made to a corresponding tab bar for display.

In some embodiments, the search page 400 is configured as the first search mode by default, that is, as shown in FIG. 4, the first page in step S201 presents a search interface corresponding to the first search mode.

The first search mode may be a general search mode, for example, the mode can support single keyword search, search with keywords connected based on Boolean operators, precise search, and fuzzy search.

The first search mode is commonly used with a simple interface, and can usually meet the most basic search requirements of the user. By taking the first search mode as a default configuration mode of the search interface, it can achieve higher user interaction friendliness and is concise and easy to use.

The triggering manner for switching to the second search mode can be displayed in the search prompt area 402, and may include a preset key or a preset button. As shown in FIG. 4, two manners are prompted. One is a combination of Shift key and Enter key, and the other is highlighted "batch search", which is configured as a clickable button to trigger the second search mode.

In addition to the manner prompted by the search prompt area 402, the second search mode may be alternatively entered by the following manner:
inputting a plurality of keywords connected by a preset symbol in the search input area.

For example, a plurality of keywords connected by line breaks are inputted.

In some embodiments, the user needs to search for a group of user IDs, and the user selects a plurality of lines of user IDs, with one user ID for each line, and copies the user IDs, so that content copied by the user are a plurality of user IDs connected by line breaks. When the user directly clicks on the search input area in the first search mode and pastes the copied content thereinto, the second search mode is triggered to be entered.

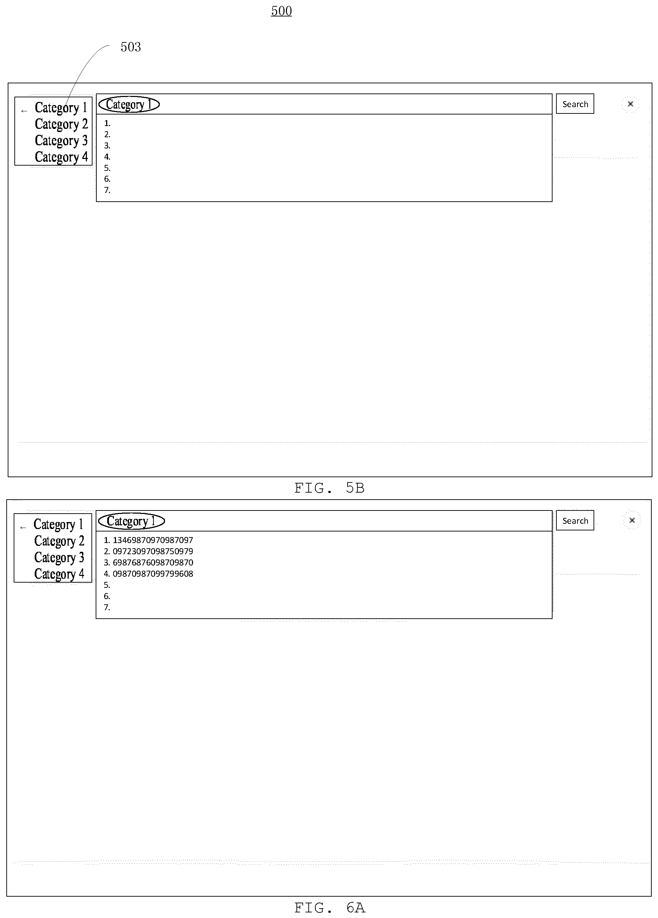

FIGS. 5A and 5B are schematic diagrams of a search page in a second search mode with a search category option widget hidden and a search page in a second search mode with a search category option widget displayed respectively according to an exemplary embodiment of the present disclosure.

As shown in FIG. 5A, the search page 500 in the second search mode includes a search interface, and the search interface includes a search input area 501 for inputting a search keyword, a search trigger button, and a search exit button.

The search input area 501 further includes a search category input area 502 for inputting a search category, and the search category input area 502 displays a current search category. The search input area 501 includes a plurality of keyword input lines. For example, as shown in FIGS. 5A and 5B, seven keyword input lines may be displayed, each keyword input line is used to input one search keyword.

There may exist a plurality of manners of inputting a search category into the search category input area, such as manual filling in or selection from options, etc.

In some embodiments, to simplify a page layout, a manner of hiding an option widget may be used. As shown in FIG. 5A, display of a search category option widget 503 shown in FIG. 5B is triggered by clicking on "Category 1" displayed in the search category input area. The search category option widget 503 includes a plurality of selectable search categories, and by checking one of the search categories, vertical search under the current search category can be implemented.

The search page input area 501 may be different depending on manners of inputting keywords and triggering to enter the second search mode input by the user in the first search mode.

FIG. 6A is a schematic diagram of a search page in the second search mode triggered to enter in a manner of copying and pasting a plurality of keywords connected by line breaks, according to an exemplary embodiment of the present disclosure.

As shown in FIG. 6A, when a user inputs a plurality of keywords connected by a preset symbol in the search input area in the first search mode, the search interface enters the second search mode. Each of the plurality of keywords is automatically inputted into one of the keyword input lines.

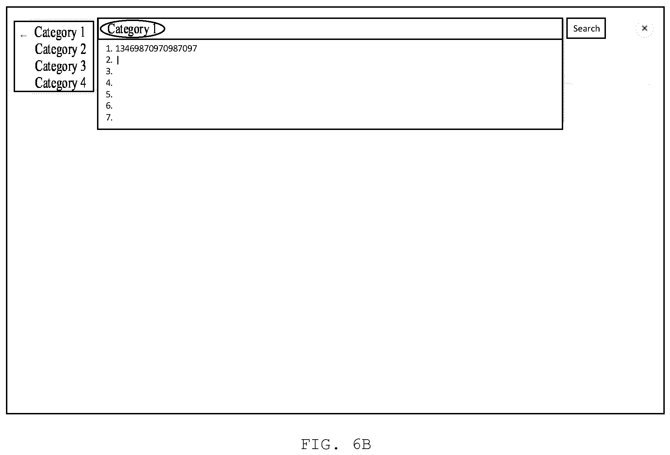

FIG. 6B is a schematic diagram of a search page in a second search mode triggered to enter in a manner of triggering a preset condition, according to an exemplary embodiment of the present disclosure.

As shown in FIG. 6B, when a user inputs a keyword in the search input area in the first search mode and triggers a preset condition for entry, the search interface enters the second search mode. The preset condition may include a preset key or a preset button, for example, the user presses a Shift key and an Enter key at the same time, or the user clicks on a "batch search" button in the search prompt area 402.

The inputted keyword is automatically entered into a first keyword input line among the plurality of keyword input lines in the search input area in the second search mode.

When the user directly triggers the preset condition without inputting a keyword in the search input area in the first search mode, the search interface enters the second search mode. The preset condition may include triggering a preset key or a preset button, the preset key may be a preset single key or a preset combination key, for example, the user presses the Shift key and the Enter key at the same time. The preset button may be an icon button or a text button, and for example, may be the "batch search" text button highlighted in the search prompt area 402.

As shown in FIG. 5A, the search input area 501 is empty, and the user can input a first keyword to be searched by clicking on the first keyword input line, and then input each keyword to be searched line by line.

In the above case, regardless of whether a keyword in the keyword input line is automatically filled or manually filled by the user, the user can continue filling after the last filled keyword input line, for example, by clicking on the "Enter" key or directly clicking on the next keyword input line, until the user fills in all keywords to be searched.

Search in the current search mode may be triggered by clicking on the search trigger button. In the second search mode, batch vertical search under the current search category can be performed for a plurality of filled keywords, that is, performing search for each entered keyword under the current search category, and returning a collection of search results for each keyword under the current search category.

In some embodiments, in the second search mode, under the current search category, the search for each keyword is precise search. This is a compromise between shortening a search time and integrity of search results.

The user may click on the search exit button at any time to exit the search page. Optionally, the user may alternatively exit the search page by clicking on an ESC key.

In some embodiments, in the first search mode, the search input area is a single-line.

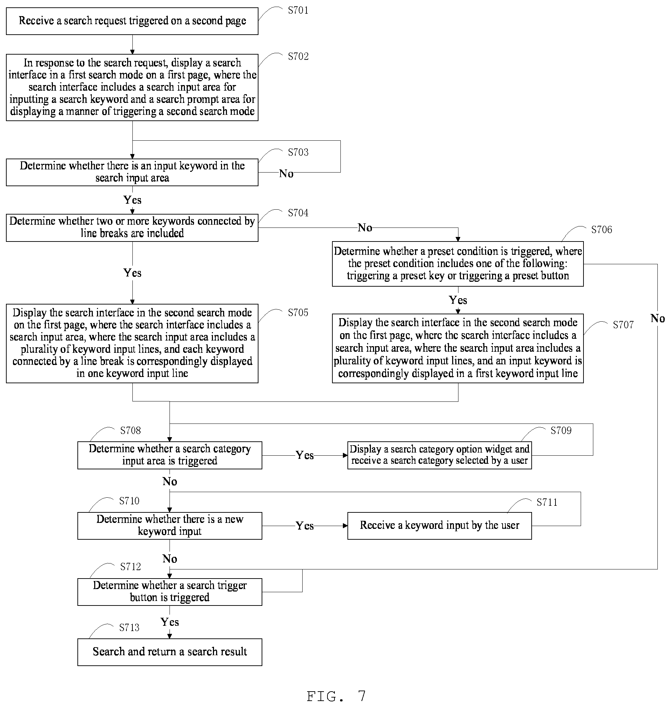

FIG. 7 is a flowchart of a search interface display method according to an exemplary embodiment of the present disclosure.

As shown in FIG. 7, a search interface display method is provided, including the following.

S701: Receive a search request triggered on a second page.

S702: In response to the search request, display a search interface in a first search mode on a first page, the search interface including a search input area for inputting a search keyword and a search prompt area for displaying a manner of triggering a second search mode.

The search prompt area displays a preset condition for triggering the second search mode. The preset condition may include a preset key or a preset button.

Step S703: Determine whether there is an inputted keyword in the search input area. If yes, proceed to step S704, otherwise return step S702.

Step S704: Determine whether two or more keywords connected by line breaks are included. If yes, proceed to step S705, otherwise proceed to step S706.

Step S705: Display a search interface in the second search mode on the first page, the search interface including a search input area, where the search input area includes a plurality of keyword input lines, and each keyword connected by line breaks is correspondingly displayed in one keyword input line. Proceed to step S708.

In some embodiments, a cursor is displayed on a line next to the last filled keyword input line, so that a user can continue to input.

Step S706: Determine whether a preset condition is triggered, where the preset condition includes one of the following: triggering a preset key or triggering a preset button. If yes, proceed to step S707, otherwise proceed to step S712.

Step S707: Display a search interface in the second search mode on the first page, where the search interface includes a search input area, where the search input area includes a plurality of keyword input lines, and an input keyword is correspondingly displayed in a first keyword input line. Proceed to step S708.

In some embodiments, a cursor is displayed on a line next to the last filled keyword input line, so that a user can continue to input.

Step S708: Determine whether a search category input area is triggered. If yes, proceed to step S709, otherwise proceed to step S710.

Step S709: Display a search category option widget and receive a selected search category. Return Step S708.

Step S710: Determine whether there is a new keyword inputted. If yes, proceed to step S711, otherwise proceed to step S712.

Step S711: Receive a keyword inputted by the user. Return Step S710.

S712: Determine whether a search trigger button is triggered, and if yes, proceed to step S713, otherwise return step S712.

Step S713: perform searching and return a search result.

If there is a search category restriction, a search result is returned under a current search category.

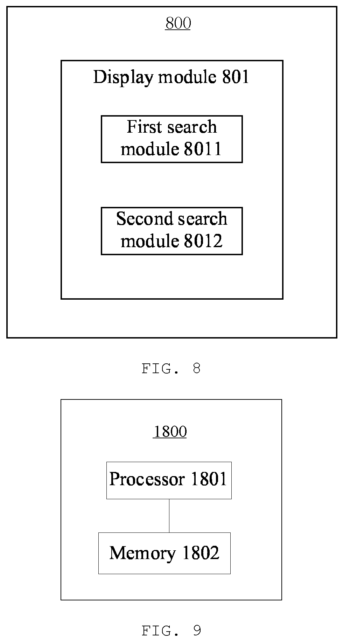

In a case of division of functional modules corresponding to respective functions, an embodiment of the present disclosure provides a search interface display apparatus, the search interface display apparatus may be a server or a chip applied to the server. FIG. 8 is a schematic block diagram of functional modules of a search interface display apparatus according to an exemplary embodiment of the present disclosure. As shown in FIG. 8, the search interface display apparatus 800 includes:
a display module 801, configured to display a search interface on a first page, where the above search interface provides a first search mode and a second search mode, and includes a search input area for inputting a search keyword;

The above display module includes:
a first search module 8011, configured to display the above search interface in the first search mode, where in the first search mode, the search interface further includes a search prompt area, which is used to display a manner of triggering the above second search mode; and
a second search module 8012, configured to display the above search interface in the second search mode, where the above search input area further includes a search category input area, which is used to input a search category, and the above search input area includes a plurality of keyword input lines, each keyword input line being used to input one search keyword.

An embodiment of the present disclosure further provides an electronic device, including: at least one processor; and a memory configured to store instructions executable by the above at least one processor, where the above at least one processor is configured to execute the above instructions, to implement the above method according to the embodiments of the present disclosure.

FIG. 9 is a schematic structural diagram of an electronic device according to an exemplary embodiment of the present disclosure. As shown in FIG. 9, the electronic device 1800 includes at least one processor 1801 and a memory 1802 coupled to the processor 1801. The processor 1801 can perform corresponding steps of the above method according to the embodiments of the present disclosure.

The above processor 1801 may be also referred to as a central processing unit (CPU), which may be an integrated circuit chip with a signal processing capability. Each step of the above method according to the embodiments of the present disclosure can be implemented by an integrated logic circuit of hardware or an instruction in the form of software in the processor 1801. The above processor 1801 may be a general-purpose processor, a digital signal processor (DSP), an application-specific integrated circuit (ASIC), a field programmable gate array (FPGA) or another programmable logic device, a discrete gate or transistor logic device, or a discrete hardware component. The general-purpose processor may be a microprocessor, or the processor may be any conventional processor, or the like. The steps of the method disclosed in combination with the embodiments of the present disclosure may be directly embodied as being implemented by a hardware decoding processor, or by a combination of hardware and software modules in the decoding processor. The software module may be located in the memory 1802, for example, a mature storage medium in the art, such as a random-access memory, a flash memory, a read-only memory, a programmable read-only memory, an electrically erasable programmable memory, or a register. The processor 1801 reads information in the memory 1802, and implements the steps of the above method in combination with the hardware of the processor.

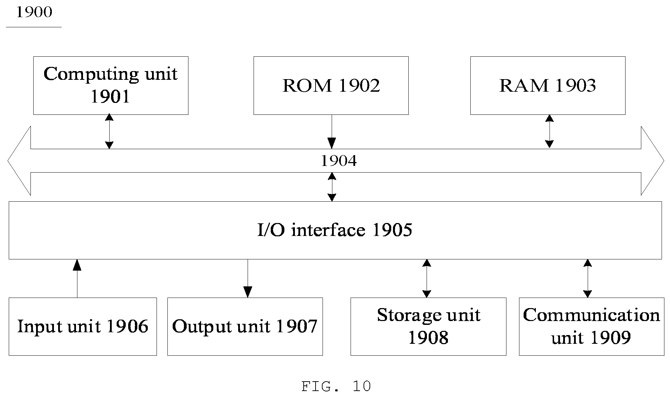

In addition, when various operations/processing according to the present disclosure can be implemented by software and/or firmware, programs constituting the software may be installed from the storage medium or a network to a computer system with a dedicated hardware structure, such as a computer system 1900 shown in FIG. 10. When various programs are installed, the computer system can perform various functions, including the functions as described above, and the like. FIG. 10 is a structural block diagram of a computer system according to an exemplary embodiment of the present disclosure.

The computer system 1900 is intended to represent various forms of digital electronic computer devices, such as a laptop computer, a desktop computer, a workbench, a personal digital assistant, a server, a blade server, a mainframe computer, and other suitable computers. The electronic device may alternatively represent various forms of mobile apparatuses, such as a personal digital processor, a cellular phone, a smart phone, a wearable device and other similar computing apparatuses. The components shown herein, their connections and relationships, and their functions are by way of example only and are not intended to limit the implementation of the present disclosure described and/or claimed herein.

As shown in FIG. 10, the computer system 1900 includes a computing unit 1901. The computing unit 1901 may perform various appropriate actions and processing based on a computer program stored in a read-only memory (ROM) 1902 or a computer program loaded from a storage unit 1908 into a random-access memory (RAM) 1903. The RAM 1903 may further store various programs and data required for the operation of the computer system 1900. The computing unit 1901, the ROM 1902, and the RAM 1903 are connected to each other by a bus 1904. An input/output (I/O) interface 1905 is also connected to the bus 1904.

A plurality of components in the computer system 1900 are connected to the I/O interface 1905, and include: an input unit 1906, an output unit 1907, a storage unit 1908, and a communication unit 1909. The input unit 1906 may be any type of device that can input information to the computer system 1900, and the input unit 1906 may receive input digital or character information and generate a key signal input related to user settings and/or function control of the electronic device. The output unit 1907 may be any type of device that can present information and may include, but is not limited to, a display, a speaker, a video/audio output terminal, a vibrator, and/or a printer. The storage unit 1908 may include, but is not limited to, a disk and a compact disc. The communication unit 1909 allows the computer system 1900 to exchange information/data with other devices over a network (such as the Internet), and may include, but is not limited to, a modem, a network card, an infrared communication device, a wireless communication transceiver, and/or a chipset, such as a Bluetooth^{™} device, a Wi-Fi device, a WiMax device, a cellular communication device, and/or the like.

The computing unit 1901 may be various general-purpose and/or special-purpose processing assemblies with processing and computing capabilities. Some examples of the computing unit 1901 include, but are not limited to, a central processing unit (CPU), a graphics processing unit (GPU), various dedicated artificial intelligence (AI) computing chips, various computing units for running machine learning model algorithms, a digital signal processor (DSP), and any appropriate processor, controller and microcontroller. The computing unit 1901 performs various methods and processes as described above. For example, in some embodiments, the above methods according to the embodiments of the present disclosure may be implemented as computer software programs tangibly contained in a machine-readable medium such as the storage unit 1908. In some embodiments, some or all of computer programs may be loaded into and/or installed onto the computer system 1900 by the ROM 1902 and/or the communication unit 1909. In some embodiments, the computing unit 1901 may be configured to perform the above methods according to the embodiments of the present disclosure by any other suitable means (for example, by means of firmware).

An embodiment of the present disclosure further provides a computer-readable storage medium, when instructions in the computer-readable storage medium are executed by a processor of an electronic device, the electronic device can perform the above methods according to the embodiments of the present disclosure.

The computer-readable storage medium according to the embodiment of the present disclosure may be a tangible medium that may contain or store a program used by or in combination with an instruction execution system, apparatus, or device. The above computer-readable storage medium may include, but is not limited to, electronic, magnetic, optical, electromagnetic, infrared and semiconductor systems, apparatuses, or devices, or any suitable combination thereof. More specifically, the above computer-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above computer-readable medium may be contained in the above electronic device. Alternatively, the computer-readable medium may exist independently, without being assembled into the electronic device.

An embodiment of the present disclosure further provides a computer program product, including a computer program, where when the computer program is executed by a processor, the above methods according to the embodiments of the present disclosure are implemented.

In the embodiments of the present disclosure, computer program codes for performing operations of the present disclosure may be written in one or more programming languages or a combination thereof. The above programming languages include, but are not limited to, an object-oriented programming language, such as Java, Smalltalk, and C++, and further include conventional procedural programming languages, such as "C" language or similar programming languages. The program codes may be completely executed on a customer computer, partially executed on a customer computer, executed as an independent software package, partially executed on a customer computer and partially executed on a remote computer, or completely executed on a remote computer or server. In the case of the remote computer, the remote computer may be connected to the customer computer over any kind of network (including a local area network (LAN) or a wide area network (WAN)), or may be connected to an external computer.

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of codes, and the module, program segment, or part of codes contains one or more executable instructions for implementing a specified logical function. It should be also noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should be also noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related modules, components, or units described in the embodiments of the present disclosure may be implemented by software, or may be implemented by hardware. The names of the modules, components, or units do not constitute a limitation on the modules, components, or units themselves in some cases.

The functions described herein above may be performed at least partially by one or more hardware logic components. For example, without limitation, exemplary hardware logic components that may be used include: a field programmable gate array (FPGA), an application-specific integrated circuit (ASIC), an application-specific standard product (ASSP), a system-on-chip (SOC), a complex programmable logic device (CPLD), and the like.

The foregoing descriptions are merely some embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

While some specific embodiments of the present disclosure have been exemplarily described in detail, it should be understood by those skilled in the art that the above examples are merely for illustration and are not intended to limit the scope of the present disclosure. Those skilled in the art should understand that various modifications can be made to the above embodiments, without departing from the scope and spirit of the present disclosure. The scope of the present disclosure is defined by the appended claims.

## Claims

1. A search interface display method, comprising:
displaying a search interface on a first page, wherein the search interface provides a first search mode and a second search mode, and comprises a search input area which is used to input a search keyword,
wherein in the first search mode, the search interface further comprises a search prompt area, which is used to display a manner of triggering the second search mode; and
in the second search mode, the search input area further comprises a search category input area, which is used to input a search category, and the search input area comprises a plurality of keyword input lines, wherein each keyword input line is used to input one search keyword.

2. The method according to claim **1,** wherein the displaying the search interface on the first page comprises:
providing the first search mode by the search interface by default, and
providing the second search mode by the search interface in response to the second search mode being triggered,
wherein the first search mode is single search, and the second search mode is batch search.

3. The method according to claim 1 or 2, wherein the manner of triggering the second search mode comprises one of:
entering a plurality of keywords connected by a preset symbol in the search input area in the first search mode; and
triggering a preset condition in the first search mode, wherein the preset condition comprises a preset key or a preset button.

4. The method according to claim 3, wherein the search prompt area is used to display the preset condition;
the preset key comprises a preset single key or a preset combination of a plurality of keys; and
the preset button comprises clickable text.

5. The method according to claim 3, wherein
when the plurality of keywords connected by the preset symbol are inputted in the search input area in the first search mode, the search interface enters the second search mode; and
each of the plurality of keywords is automatically inputted into one of the keyword input lines.

6. The method according to claim 3, wherein
when the preset condition is triggered in the first search mode, the search interface enters the second search mode; and
in response to a keyword inputted in the search input area in the first search mode, the keyword is automatically inputted into a first keyword input line among the plurality of keyword input lines.

7. The method according to one of claims 1 to 6, wherein the search category input area comprises a search category button, which is configured to display a current search category; and
the search category input area further comprises a hidden option widget, which is configured to display a plurality of selectable search categories in response to the search category button being triggered.

8. The method according to one of claims 1 to 7, wherein before the displaying the search interface on the first page, the method further comprises triggering a search request on a second page,
wherein the second page is a page different from the first page.

9. The method according to one of claims 1 to 8, wherein the first page further comprises a search result interface, which comprises a plurality of tab bars, and the method further comprises:
in response to a tab bar being triggered, displaying a search result corresponding to the currently triggered tab bar on the search result interface.

10. A search interface display apparatus, comprising:
a display module configured to display a search interface on a first page, wherein the search interface provides a first search mode and a second search mode, and comprises a search input area which is used to input a search keyword,
wherein the display module comprises:
a first search module configured to display the search interface in the first search mode, wherein in the first search mode, the search interface further comprises a search prompt area, which is used to display a manner of triggering the second search mode; and
a second search module configured to display the search interface in the second search mode, wherein the search input area further comprises a search category input area, which is used to input a search category, and the search input area comprises a plurality of keyword input lines, wherein each keyword input line is used to input one search keyword.

11. An electronic device, comprising:
at least one processor; and
a memory configured to store instructions executable by the at least one processor,
wherein the at least one processor is configured to execute the instructions, to implement the method according to any one of claims 1 to 9.

12. A computer-readable storage medium having a computer program stored thereon, wherein the computer program, when executed by a processor, causes the method according to any one of claims 1 to 9 to be implemented.

13. A computer program, comprising instructions, wherein the instructions, when executed by a processor, cause the method according to any one of claims 1 to 9 to be implemented.

14. A computer program product, comprising instructions, wherein the instructions, when executed by a processor, cause the method according to any one of claims 1 to 9 to be implemented.
